# NEUE EUROPÄISCHE PATENTSCHRIFT

(11) **EP 1 861 251 B2**
(45) Veröffentlichungstag und Bekanntmachung des Hinweises auf die Entscheidung über den Einspruch: **13.06.2012**
(45) Hinweis auf die Patenterteilung: 31.12.2008
(21) Anmeldenummer: 06725103.3
(22) Anmeldetag: 16.03.2006
(51) Int. Cl.: B32B 27/40, C08G 18/10, D06N 3/14, C14C 11/00

(54) **VERFAHREN ZUR HERSTELLUNG VON POLYURETHANSCHICHTEN UND DEREN VERWENDUNG ALS KUNSTLEDER**
METHOD FOR PRODUCING POLYURETHANE LAYERS AND USE THEREOF AS IMITATION LEATHER
PROCÉDÉ DE PRODUCTION DE COUCHES DE POLYURÉTHANNE ET LEUR UTILISATION EN TANT QUE CUIR SYNTHÉTIQUE

(30) Priorität: 17.03.2005 DE 102005012812
(43) Veröffentlichungstag der Anmeldung: 05.12.2007
(73) Patentinhaber: BASF SE, 67056 Ludwigshafen (DE)
(72) Erfinder: POHL, Wolfgang, 80797 München (DE); SCHMALKUCHE, Cord, 49401 Damme (DE); LEIFHEIT, Holger, 49074 Osnabrück (DE); QUAISER, Stefan, 49401 Damme (DE); CHEN, Cheun-Gwo, Shulin City, Taipei (TW); CHIEN, Wei, Liang, Jhubei City Hsinchu County 302 (TW)
(86) Internationale Anmeldenummer: PCT/EP2006/060791
(87) Internationale Veröffentlichungsnummer: WO 2006/097508

(56) Entgegenhaltungen:
- EP-A- 0 002 465
- EP-A2- 0 105 046
- EP-A2- 0 717 069
- EP-A2- 1 059 379
- DD-A1- 237 190
- DD-A3- 240 653
- DE-A1- 2 431 908
- GB-A- 1 171 932
- US-A- 4 102 719

## Beschreibung

Die Erfindung betrifft ein Verfahren, bevorzugt ein lösungsmittelfreies Verfahren, zur Herstellung einer Polyurethanschicht und deren Verwendung als Kunstleder.

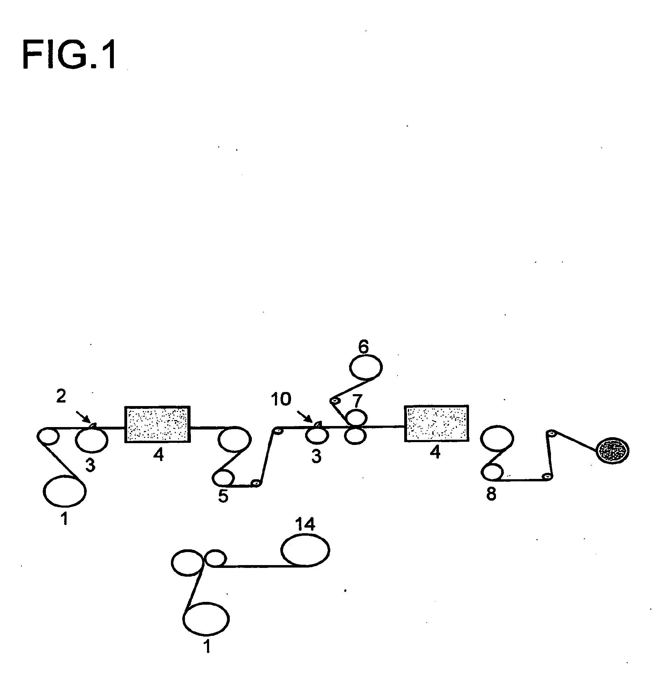

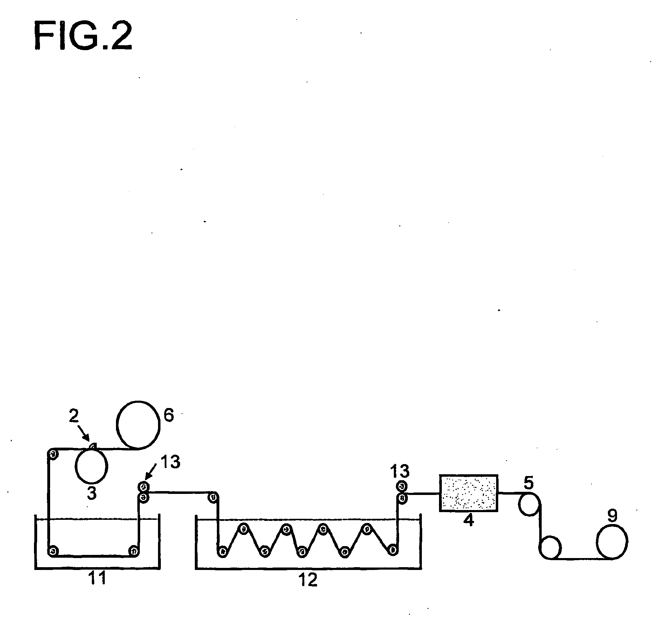

Die Verwendung von Polyurethanharzen zur Herstellung von Kunstleder ist bekannt, beispielsweise beschreibt EP 1143063 geeignete Harze. Im Stand der Technik finden ferner üblicherweise zwei Verfahren zur Herstellung von Kunstleder Anwendung, das sogenannte "Trockenverfahren" und das sogenannten "Nassverfahren". Im Trockenverfahren werden hierbei üblicherweise Polyurethanharze und im Nassverfahren Polyurethansuspensionen verwendet. In Figur 1 wird das Trockenverfahren erläutert, in Figur 2 dass Nassverfahren.

In den Figuren 1 und 2 bedeutet:
- 1: Trennschicht
- 2: Auftrag Polyurethanharz in Lösungsmittel
- 3: Rakel
- 4: Ofen
- 5: Abkühlrolle
- 6: Substratschicht
- 7: Laminierrolle
- 8: Kühltrommel
- 9: Produktspindel
- 10: Auftrag PUR-Suspension
- 11: Koagulationsbad
- 12: Waschbad
- 13: Auspressrolle
- 14: Kunstleder

Beide Verfahren haben gemeinsam, dass sie technisch aufwendig sind, unter anderem, da eine erhebliche Menge an Lösungsmitteln in den Verfahren eingesetzt werden muss, die zur Lösung der Polyurethanharze beziehungsweise der Polyurethansuspension dienen.

Aufgabe der Erfindung war es daher, ein Verfahren zur Herstellung einer Polyurethanschicht, die bevorzugt als Kunstleder verwendet werden kann, bereit zu stellen, das technisch mit geringerem Aufwand, als die aus dem Stand der Technik bekannten Verfahren betrieben werden kann. Insbesondere war es Aufgabe der Erfindung ein lösungsmittelfreies Verfahren zur Herstellung einer Polyurethanschicht, die bevorzugt als Kunstleder verwendet werden kann, bereit zu stellen. Weiterhin war es Aufgabe der Erfindung ein Verfahren zur Herstellung einer Polyurethanschicht, die bevorzugt als Kunstleder verwendet werden kann, bereit zu stellen, das mit einer kurzen Produktionslinie, beispielsweise von etwa 20 bis 40 Metern, verwirklicht werden .

Die Aufgabe konnte dadurch gelöst werden, dass nicht Polyurethan in Lösungsmittel aufgebracht wird, sondern dass Polyurethansystemkomponenten, die nach dem Aufsprühen zum Polyurethan aushärten, aufgesprüht werden. Insbesondere konnte die Aufgabe durch Aufbringen von speziell entwickelten Polyurethansystemkomponenten gelöst werden.

Gegenstand der Erfindung ist somit ein Verfahren zur Herstellung einer Polyurethanschicht, umfassend die Schritte
i) Bereitstellen einer Trennschicht,
ii) Aufsprühen von Polyurethansystemkomponenten auf die Trennschicht,
iii) gegebenenfalls Aufbringen einer Substratschicht auf die Polyurethansystemkomponenten,
iv) Aushärten der Polyurethansystemkomponenten zu einer Polyurethanschicht,
v) Trennen der Trennschicht von der Polyurethanschicht.

Das erfindungsgemäße Verfahren dient zur Herstellung einer erfindungsgemäßen Polyurethanschicht. Diese Polyurethanschicht weist üblicherweise eine Dicke von 0,01 mm bis 20 mm, bevorzugt von 0,1 mm bis 10 mm, besonders bevorzugt von 0,5 mm bis 5 mm auf.

Ebenfalls ist Gegenstand der Erfindung eine Polyurethanschicht, erhältlich nach dem erfindungsgemäßen Verfahren.

Das erfindungsgemäße Verfahren umfasst in Schritt i) eine Trennschicht. Grundsätzlich ist als Trennschicht jede Schicht geeignet, die es ermöglicht, dass man darauf Polyurethansystemkomponenten aufbringt, diese zu Polyurethan umsetzt und das resultierende Polyurethan wieder von der Trennschicht trennen kann.

Die Trennschicht weist üblicherweise eine Dicke von 0,001 Millimeter (mm) bis 10 mm, bevorzugt von 0,01 mm bis 5 mm, insbesondere von 0,1 mm bis 2 mm auf.

Geeignete Trennschichten sind üblicherweise im Fachgebiet unter dem Ausdruck "release paper" bekannt. Beispiele für geeignete Trennschichten sind Schichten, beispielsweise Folien, aus Metall, Kunststoff oder Papier.

In einer bevorzugten Ausführungsform wird als Trennschicht eine Papierschicht verwendet, die gegebenenfalls mit einem Kunststoff beschichtet ist. Bevorzugt ist die Papierschicht hierbei mit einem Polyolefin, bevorzugt Polypropylen, beschichtet. Alternativ bevorzugt ist die Papierschicht mit Silikon beschichtet.

In einer alternativen bevorzugten Ausführungsform wird als Trennschicht eine PET-Schicht (= Polyethylentherephthalat) verwendet, die gegebenenfalls mit einem Kunststoff beschichtet ist. Bevorzugt ist die PET-Schicht hierbei mit einem Polyolefin, bevorzugt Polypropylen, beschichtet. Alternativ bevorzugt ist die PET-Schicht mit Silikon beschichtet.

Beispiele für geeignete Trennschichten sind kommerziell erhältlich. Auf dem Fachgebiet bekannte Hersteller sind beispielsweise Warren (Sappi, USA), Binda (Italien), Arjo Wiggins (UK/USA) und Lintec (Japan).

Die verwendeten Trennschichten können glatte oder unebene Oberfläche aufweisen. Die Art der Trennschicht richtet sich hierbei nach der gewünschten Oberfläche der im erfindungsgemäßen Verfahren resultierenden Polymerschicht. Sofern eine resultierende Polyurethanschicht mit einer glatten Oberfläche gewünscht wird, so weist die Trennschicht ebenfalls eine glatte Oberfläche auf. Sofern eine resultierende Poly urethanschicht mit einer unebene oder gemusterte Oberfläche gewünscht wird, so weist die Trennschicht ebenfalls unebene oder gemusterte Oberfläche auf.

Bevorzugt ist die Trennschicht derart gemustert, dass das Produkt eine Ledernarbung aufweist.

Im Schritt (ii) des erfindungsgemäßen Verfahrens werden Polyurethansystemkomponenten auf die Trennschicht aufgesprüht. Das Aufsprühen erfolgt hierbei bevorzugt auf nur einer Seite der Trennschicht.

Das Aufsprühen der Polyurethansystemkomponenten erfolgt bevorzugt flächig, d.h. die Polyurethansystemkomponenten werden so aufgesprüht, dass die gesamte Oberfläche der Trennschicht mit Polyurethansystemkomponenten bedeckt ist.

Unter Aufsprühen ist das Aufbringen des flüssigen Materials über einen Sprühkopf zu verstehen. Der Sprühkopf zerstäubt bevorzugt das Material in Tröpfchen, insbesondere feine Tröpfchen. Dabei entsteht bevorzugt ein fächerförmiger Sprühstrahl. Bevorzugt werden hierbei die Polyurethansystemkomponenten in Form von Teilchen (wobei die Teilchen bevorzugt in Form von Tröpfchen vorliegen) mit einem Teilchendurchmesser von 1 bis 500 µm, besonders bevorzugt von 10 bis 100 µm, aufgesprüht.

Die Polyurethansystemkomponenten werden im erfindungsgemäßen Verfahren üblicherweise in einer Menge aufgebracht, dass die resultierende Polyurethanschicht eine Dicke von 0,01 Millimeter (mm) bis 20 mm, bevorzugt von 0,1 mm bis 10 mm, besonders bevorzugt von 0,5 mm bis 5 mm aufweist.

Der Begriff Polyurethansystemkomponenten umfasst üblicherweise eine Isocyanatkomponente (a) und eine Polyolkomponente (b).

Die Isocyanatkomponente (a) enthält Polyisocyanate. Die verwendeten Polyisocyanate umfassen die üblichen aliphatischen, cycloaliphatischen und insbesondere aromatischen Di- und/oder Polyisocyanate. Bevorzugt verwendet werden Toluylendiisocyanat (TDI), Diphenylmethandiisocyanat (MDI) und Gemische aus Diphenylmethandiisocyanat und Polyphenylenpolymethylenpolyisocyanaten (Roh-MDI), insbesondere Diphenylmethandiisocyanat (MDI).

Die Isocyanate oder auch nachstehend beschriebenen lsocyanatprepolymere können auch modifiziert sein, beispielsweise durch Einbau von Uretdion-, Carbamat-, Isocyanurat-, Carbodiimid-, Allophanatgruppen. Weiterhin können Abmischungen der verschiedenen Isocyanate Verwendung finden. Bevorzugt verwendet werden Carbodiimid modifizierte Isocyanate. Diese finden bevorzugt in einer Menge von 1 bis 20 Gew.-%, mehr bevorzugt von 2 bis 10 Gew.-%, bezogen auf das Gesamtgewicht der Isocyanatkomponente (a) Verwendung.

Die Polyisocyanate (a) können auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), mit nachstehend beschriebenen Verbindungen mit gegenüber Isocyanaten reaktiven Wasserstoffatomen (b) zum Prepolymer umgesetzt werden. Die Umsetzung kann beispielsweise bei Temperaturen von etwa 80°C erfolgen. Das Polyol-Polyisocyanat-Verhältnis wird im allgemeinen so gewählt, dass der NCO-Gehalt des Prepolymeren 8 bis 25 Gew.-%, vorzugsweise 10 bis 24 Gew.-%, besonders bevorzugt 13 bis 23 Gew.-% beträgt.

Besonders bevorzugt wird als Isocyanatkomponente (a) ein Gemisch aus Diphenylmethandiisocyanat und Polytetrahydrofuran (PTHF), insbesondere PTHF mit einem zahlenmittleren Molekulargewicht von 1000 bis 2500, verwendet. Dieses Gemisch weist bevorzugt einen NCO-Gehalt von 14 bis 22 %, besonders bevorzugt von 16 bis 20 %, auf.

Die Polyolkomponente (b) kann grundsätzlich Verbindungen mit gegenüber Isocyanaten reaktiven Wasserstoffatomen enthalten. Diese Verbindungen sind solche, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Je nach Wahl der Komponente (b) umfasst im Rahmen dieser Erfindung der Begriff Polyurethane allgemein Polyisocyanat-Polyadditionsprodukte, beispielsweise auch Polyharnstoffe.

Bevorzugt enthält die Polyolkomponente (b) Polyetherole und Polyesterole. Diese sind allgemein bekannt und beispielsweise in "Kunststoffhandbuch Polyurethane" Günter Oertel, Carl-Hanser-Verlag, 2. Auflage 1983, Kap. 3.1.1 beschrieben. Alternative, im Fachgebiet ebenfalls übliche Bezeichnungen sind Polyetherpolyole oder Polyetheralkohole bzw. Polyesterpolyole oder Polyesteralkohole.

Falls Polyesterole eingesetzt werden, dann werden diese üblicherweise durch Kondensation von mehrfunktionellen Alkoholen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Falls Polyetherole eingesetzt werden, so werden diese im allgemeinen nach bekannten Verfahren, beispielsweise durch anionische Polymerisation mit Alkalihydroxiden, als Katalysatoren und unter Zusatz eines Startermoleküls mehrere reaktive Wasserstoffatome gebunden enthält, aus einem oder mehreren Alkylenoxiden, ausgewählt aus Propylenoxid (PO) und Ethylenoxid (EO), Butylenoxid und Tetrahydrofuran, hergestellt.

Als Polyetherole (b) können weiterhin sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden durch Anlagerung von Ethylenoxid und/oder Propylenoxid und Mischungen daraus, an mindestens difunktionelle Alkohole in Gegenwart von sogenannten Doppelmetallcyanidkatalysatoren hergestellt.

Die Alkylenoxide können einzeln, alternierend nacheinander oder als Mischungen verwendet werden. Der Einsatz eines EO/PO-Gemisches führt zu einem Polyetherpolyol mit statistischer PO/EO-Einheiten-Verteilung. Es ist möglich, zunächst ein PO/EO-Gemisch einzusetzen und dann vor Abbruch der Polymerisation nur noch PO oder EO zu verwenden, dann erhält man ein Polyetherpolyol mit PO- bzw. EO-Endcap.

Als Startermoleküle werden üblicherweise NH- oder OH-funktionelle Verbindungen wie Wasser, Amine oder Alkohole verwendet. Bevorzugt werden zwei- bis sechswertige Alkohole verwendet, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit und/oder Sorbit.

Weiterhin werden bevorzugt Polyetherole verwendet, die durch ringöffnende Polymerisation von Tetrahydrofuran erhalten werden. Diese Polytetrahydrofurane weisen bevorzugt eine Funktionalität von etwa 2 auf. Ferner weisen sie bevorzugt ein zahlenmittleres Molekulargewicht von 500 bis 4000 g/mol, bevorzugt von 700 bis 3000 g/mol, besonders bevorzugt von 900 bis 2500 g/mol auf. Polytetrahydrofuran (= PTHF) ist im Fachgebiet auch unter den Bezeichnungen Tetramethylenglykol (= PTMG), Polytetramethylenglykolether (= PTMEG) oder Polytetramethylenoxide (= PTMO) bekannt.

Neben den vorstehend erwähnten Polyetherpolyolen kann die Polyolkomponente (b) auch übliche Kettenverlängerungsmittel enthalten.

In einer bevorzugten Ausführungsform enthält die Polyolkomponente einen oder mehre Bestandteile ausgewählt aus
(b-1) ein Polyol, bevorzugt ein Polyetherpolyol, mit zahlenmittlerem Molekulargewicht von 500 g/mol bis weniger als 3000 g/mol
(b-2) ein Polyol, bevorzugt ein Polyetherpolyol, mit zahlenmittlerem Molekulargewicht von 3000 g/mol bis 8000 g/mol
(b-3) ein Kettenverlängerungsmittel mit einem Molekulargewicht von weniger als 400 g/mol.

In einer bevorzugten Ausführungsform wird in der Komponente (b-1) ein Polyetherol oder ein Polyesterol, besonders bevorzugt ein Polyetherpolyol, mit einem zahlenmittleren Molekulargewicht von 500 bis weniger als 3000 g/mol, bevorzugt von 800 bis 2500 g/mol, besonders bevorzugt von 1000 bis 2200 g/mol als Komponenten (b1) verwendet.

Die Komponenten (b-1) weisen üblicherweise eine durchschnittliche Funktionalität von 1,8 bis 3, mehr bevorzugt von 1,9 bis 2,1, insbesondere von 2,0 auf. Unter Funktionalität ist hierbei die "theoretische OH-Funktionalität" zu verstehen, die sich aus der Funktionalität der verwendeten Startermoleküle ergibt.

Besonders bevorzugt wird als Komponente (b-1) Polytetrahydrofuran verwendet. Insbesondere wird Polytetrahydrofuran mit zahlenmittlerem Molekulargewicht von 1000 bis 2000 g/mol verwendet.

Die Komponenten (b-1) liegt üblicherweise in einer Menge von 30 bis 100 Gew.-%, bevorzugt von 50 bis 90 Gew.-%, bezogen auf das Gesamtgewicht der Komponente (b), in der Komponente (b) vor.

In einer bevorzugten Ausführungsform wird in der Komponente (b-2) ein Polyetherol oder ein Polyesterol, besonders bevorzugt ein Polyetherpolyol, mit einem zahlenmittleren Molekulargewicht von 3000 bis 8000 g/mol, bevorzugt von 3500 bis 7000 g/mol, besonders bevorzugt von 4000 bis 6000 g/mol als Komponenten (b1) verwendet.

Die Komponenten (b-2) weisen üblicherweise eine durchschnittliche Funktionalität von 1,9 bis 6, mehr bevorzugt von 2,3 bis 4, insbesondere von 3,0 auf. Unter Funktionalität ist hierbei die "theoretische OH-Funktionalität" zu verstehen, die sich aus der Funktionalität der verwendeten Startermoleküle ergibt.

Besonders bevorzugt wird als Komponente (b-2) ein Polyetherpolyol verwendet, erhältlich durch Propoxylierung und/oder Ethoxylierung von Glycerin oder Trimethylolpropan, insbesondere mit EO-Endblock. Dieses Polyetherpolyol weist bevorzugt ein zahlenmittleres Molekulargewicht von 4500 bis 6000 g/mol auf.

Die Komponente (b-2) liegt üblicherweise in einer Menge von 5 bis 80 Gew.-%, bevorzugt von 10 bis 30 Gew.-%, bezogen auf das Gesamtgewicht der Komponente (b), in der Komponente (b) vor.

Ferner kann die Polyolkomponente (b) Kettenverlängerungsmittel als Komponente (b-3) enthalten. Geeignete Kettenverlängerungsmittel sind im Stand der Technik bekannt. Bevorzugt werden 2- Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Dipropylenglykol, Tripropylenglycol. Bevorzugt wird 1,4-Butandiol verwendet.

Das Kettenverlängerungsmittel wird üblicherweise in einer Menge von 5 bis 20 Gew.-%, bevorzugt von 7 bis 16 Gew.-%, besonders bevorzugt von 9 bis 15 Gew.-%, bezogen auf das Gesamtgewicht der Komponente (b) verwendet.

In einer bevorzugten Ausführungsform erfolgt die Umsetzung der Polyurethansystemkomponenten (a) und (b) in Abwesenheit eines Treibmittels. Bei der resultierenden Polyurethanschicht handelt es sich dann um ein kompaktes Polyurethan. Unter kompaktem Polyurethan werden im Rahmen dieser Erfindung Polyurethane verstanden, die ohne Zusatz von Treibmitteln hergestellt wurden. Die in dieser Ausführungsform resultierende Polyurethanschicht weist üblicherweise eine Dichte von 0,6 bis 1,2 kg/Liter, bevorzugt von 0,8 bis 1,1 kg/Liter auf.

Gegebenenfalls kann die verwendeten Polyolkomponente (b) technisch bedingt jedoch einen geringe Anteil an Restwasser enthalten. Dies ist insbesondere dann der Fall, wenn kein Wasserfänger als Komponente (e) eingesetzt wird. Bevorzugt ist der Restwassergehalt unter 0,5 Gew.-%, besonders bevorzugt unter 0,2 Gew.-%, bezogen auf das Gesamtgewicht der eingesetzten Komponente (b).

In einer alternativen Ausführungsform kann der Umsetzung aus den Komponenten (a) und (b) ein Treibmittel (c) zugegeben werden. Die Zugabe des Treibmittels führt bevorzugt zu einer Verbesserung der Atmungsaktivität der resultierenden Polyurethanschicht.

Als Treibmittel können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, bevorzugt mit einem Siedepunkt von weniger als 60°C.

Das Treibmittel wird im allgemeinen in einer Menge von 0,05 bis 10 %, bevorzugt von 0,1 bis 5 %, bezogen auf das Gesamtgewicht der Komponenten (b) bis (f), eingesetzt. Die in dieser Ausführungsform resultierende Polyurethanschicht weist üblicherweise eine Dichte von 0,5 bis 1,1 kg/Liter, bevorzugt von 0,7 bis 0,9 kg/Liter auf.

In einer bevorzugten Ausführungsform enthält die Polyolkomponente (b) den Bestandteil (d). Bei dem Bestandteil (d) handelt es sich um Füllstoffe. Hierbei sind im allgemeinen die üblichen, auf dem Gebiet der Polyurethanchemie bekannten Füllstoffe geeignet. Beispiele für geeignete Füllstoffe sind Glasfasern, Mineralfasern, Naturfasern, wie beispielsweise Flachs, Jute oder Sisal, Glassflakes, Silikate wie Mica oder Glimmer, Salze, wie Kalziumcarbonat, Kreide oder Gips, handeln.

Bevorzugt werden Füllstoffe verwendet, die beim Verstrecken des resultierenden Polyurethans Risse in der Polyurethanschicht erzeugen. Diese Risse führen im allgemeinen zur Erhöhung der Atmungsaktivität. Besonders bevorzugt wird Kalziumcarbonat als Füllstoff verwendet.

Der Bestandteil (d) wird üblicherweise in einer Menge von 0,5 bis 60 Gew.-%, bevorzugt von 3 bis 10 Gew.%, bezogen auf das Gesamtgewicht der Komponenten (b) bis (f), verwendet.

In einer bevorzugten Ausführungsform enthält die Polyolkomponente (b) den Bestandteil (e). Bei dem Bestandteil (e) handelt es sich um Wasserfänger. Hierbei sind im allgemeinen die üblichen, auf dem Gebiet der Polyurethanchemie bekannten Wasserfänger geeignet. Beispiele für geeignete Wasserfänger sind Zeolithe, insbesondere in Form von Zeolithpasten (beispielsweise Baylith^{®} L-Paste 3A).

Der Bestandteil (e) wird üblicherweise in einer Menge von 1 bis 10 Gew.%, bevorzugt von 3 bis 8 Gew.-%, bezogen auf das Gesamtgewicht der Komponenten (b) bis (f), verwendet.

Die Umsetzung der Komponenten (a) und (b) erfolgt in einer bevorzugten Ausführungsform in Gegenwart eines Katalysators (f). Als Katalysatoren für die Herstellung der erfindungsgemäßen Polyurethanschaumstoffe werden optional die üblichen und bekannten Polyurethanbildungskatalysatoren eingesetzt, beispielsweise organische Zinnverbindungen, wie Zinndiacetat, Zinndioctoat, Dibutylzinndilaurat, und/oder stark basische Amine wie Diazabicyclooctan, Triethylamin, oder vorzugsweise Triethylendiamin oder Bis(N,N-Dimethylaminoethyl)ether.

Der Bestandteil (f) wird üblicherweise in einer Menge von 0,5 bis 5 Gew.-%, bevorzugt von 1 bis 4 Gew.-%, bezogen auf das Gesamtgewicht der Komponenten (b) bis (f), verwendet.

Die Umsetzung der Komponenten (a) und (b) erfolgt gegebenenfalls in Anwesenheit von weiteren Hilfs- und/oder Zusatzstoffen, wie z.B. Zellreglern, Trennmitteln, Pigmenten, oberflächenaktiven Verbindungen und/oder Stabilisatoren gegen oxidativen, thermischen, hydrolytischen oder mikrobiellen Abbau oder Alterung.

Die Komponenten (c), (d), (e) und (f) können sowohl direkt der Umsetzung aus Isocyanatkomponente (a) und Polyolkomponente (b) zugegeben werden als der beiden Komponente (a) und/oder (b) vor der Umsetzung zugesetzt werden. Bevorzugt werden die Komponenten (c), (d), (e) und (f) der Polyolkomponente (b) vor der Umsetzung zugesetzt.

Im erfindungsgemäßen Verfahren werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

In einer bevorzugten Ausführungsform enthalten die Polyurethansystemkomponenten im wesentlichen kein Lösungsmittel. D.h. sowohl die Komponenten (a) und (b) als auch die Komponenten (c), (d), (e), und (f) enthalten im wesentlichen kein Lösungsmittel. Im wesentlichen kein Lösungsmittel bedeutet, dass sie abgesehen von möglicherweise produktionsbedingten Verunreinigungen kein Lösungsmittel enthalten und dass den Komponenten kein Lösungsmittel zugesetzt wurde. Der Gehalt an Lösungsmittel ist somit kleiner 1 Gew.-%, bevorzugt kleiner 0,1 Gew.-%, besonders bevorzugt kleiner 0,01 Gew.-%, bezogen auf das Gesamtgewicht der Komponenten (a) bis (f).

Der Begriff Lösungsmittel ist im Fachgebiet allgemein bekannt. Lösungsmittel werden im Fachgebiet häufig auch als Solvens oder Lösemittel bezeichnet. Unter Lösungsmittel werden im Rahmen dieser Erfindung im weitesten Sinne anorganische und organische Flüssigkeiten verstanden, die andere feste Stoffe auf physikalischem Wege zur Lösung bringen können. Voraussetzung für die Eignung als Lösungsmittel ist es, dass sich beim Lösungsvorgang weder der lösende noch der gelöste Stoff chemisch verändern. Somit kann also die gelöste Komponente durch physikalische Trennverfahren, wie beispielsweise Destillation, Kristallisation, Sublimation, Verdunstung und/oder Adsorption wiedergewonnen werden.

Im Rahmen dieser Erfindung enthalten die Polyurethansystemkomponenten im wesentlichen kein organisches Lösungsmittel. Insbesondere enthalten die Polyurethansystemkomponenten im wesentlichen kein Ether u. Glykolether (wie Diethylether, Dibutylether, Anisol, Dioxan, monomeres Tetrahydrofuran), Ketone (wie Aceton, Butanon, Cyclohexanon), Ester (wie Essigsäureester), Stickstoffverbindungen (wie Dimethylformamid, Pyridin, N-Methylpyrrolidon, Acetonitril), Schwefel-Verbindungen (wie Schwefelkohlenstoff, Dimethylsulfoxid, Sulfolan), Nitro-Verbindungen (wie Nitrobenzol), Halogenkohlenwasserstoffe (wie Dichlormethan, Chloroform, Tetrachlormethan, Tri-, Tetrachlorethen, 1,2-Dichlorethan, Chlorfluorkohlenstoffe), Kohlenwasserstoffe, bevorzugt mit Siedepunkt über 60 °C, (wie Octan, Methylcyclohexan, Decalin, Benzol, Toluol, Xylol).

Im erfindungsgemäßen Verfahren werden bevorzugt die Komponenten (a) und (b) sowie gegebenenfalls (c) bis (f) so gewählt, dass die resultierende Polyurethanschicht nach Aushärtung eine Härte von Shore A (gemessen nach DIN 53505) von 20 bis 90, bevorzugt von Shore A 50 bis 75 aufweist. Die bevorzugte Härte kann beispielsweise durch geeignete Wahl des NCO-Gehaltes des Polyisocyanatprepolymers erreicht werden.

Im optionalen Schritt (iii) des erfindungsgemäßen Verfahrens erfolgt ein Aufbringen einer Substratschicht auf die Polyurethansystemkomponenten. Bevorzugt wird die Substratschicht aufgebracht, solange die Polyurethansystemkomponenten noch nicht vollständig ausgehärtet sind. D.h. solange noch eine Reaktion von Isocyanatgruppen mit OH-Gruppen erfolgt.

Grundsätzlich ist als Substratschicht jede Schicht geeignet, die einen haftenden Verbund mit der resultierenden Polyurethanschicht bilden kann.

Die Substratschicht weist üblicherweise eine Dicke von 0,01 Millimeter (mm) bis 20 mm, bevorzugt von 0,1 mm bis 10 mm, insbesondere von 1 mm bis 5 mm auf.

Beispiele für geeignete Trennschichten sind Schichten, beispielsweise Folien, aus Metall, Kunststoff, Leder und/oder Textilstoffen.

Für das erfindungsgemäße Verfahren sind verschiedene Arten der Substratschichten möglich, beispielsweise:

Gewebe-Substratschicht.: Hier kann die Substratschicht aus einer od. mehreren, gleichen od. verschiedenen, miteinander fest verbundenen Lagen bestehen, z.B. aus engod. weitmaschigen Geweben, Gewirken, Gestricken, Geflechten, Netzwerken (Netztuchen).

Vlies-Substratschicht.: Flächengebilde aus ungeordneten Fasern (z.B. Filze u. Faservliese), die bevorzugt durch ein Bindemittel untereinander verbunden sein können. Die Vlies-Substratschichten sind zumeist mit wasserunlöslichem lmprägniermitteln verfestigte Cellulose- od. Textilvliese.

Faser-Substratschicht.: Erzeugnisse aus losen, ungeordneten Fasern, die durch Kunststoffe als Bindemittel verfestigt sind. Man erhält sie z. B. durch Verkleben von Lederfasern (bevorzugt erhältlich aus Lederabfällen, z.B. von pflanzlich gegerbtem Leder) mit 8-40 Gew.-% eines Bindemittels.

Folien-Substratschicht.: Erzeugnisse, enthaltend (bevorzugt homogene) Folien aus Metall oder Kunststoff, beispielsweise Kautschuk, PVC, Polyamiden, Mischpolymerisaten und dergleichen. Die Folien-Substratschicht weist bevorzugt keine Fasereinlagerung auf.

In einer bevorzugten Ausführungsform wird als Substratschicht eine Lederschicht verwendet. Sofern eine Lederschicht verwendet wird handelt es sich bevorzugt um Spalt-leder.

Sofern eine Textilschicht verwendet wird sind folgende Stoffe zur Herstellung der Textilschicht besonders geeignet: Baumwolle, Leinen, Polyester, Polyamid und/oder Polyurethan.

Das Aufbringen der Substratschicht auf die Schicht aus Polyurethansystemkomponenten erfolgt in allgemeinen durch in Kontakt bringen und anschließendes Anpressen.

Der Anpressdruck beträgt hierbei bevorzugt zwischen 0,01 und 1 bar, mehr bevorzugt zwischen 0,05 und 0,5 bar. Die Anpresszeit beträgt zwischen 0,1 sec und 100 sec, bevorzugt zwischen 5 sec und 30 Sekunden (sec).

Im Schritt (iv) des erfindungsgemäßen Verfahrens erfolgt ein Aushärten der Polyurethansystemkomponenten zur Polyurethanschicht. Dieses Aushärten kann durch Temperaturerhöhung, beispielsweise in einem Ofen, beschleunigt werden.

In einer bevorzugten Ausführungsform erfolgt das Aushärten bei Temperaturen von 10°C bis 80°C, besonders bevorzugt von 15°C bis 50°C, insbesondere von 20°C bis 40°C.

Der Aushärtevorgang dauert solange, bis die Reaktion von Isocyanatgruppen mit OHfunktionellen Gruppen im wesentlichen abgeschlossen ist. Bevorzugt dauert der Aushärtevorgang 0,5 bis 20 Minuten, mehr bevorzugt 1 bis 10 Minuten, insbesondere 2 bis 5 Minuten.

Im Schritt (iv) des erfindungsgemäßen Verfahrens erfolgt ein Trennen der Trennschicht von der Polyurethanschicht. Die Trennung kann durch die üblichen, im Stand der Technik bekannten Methoden erfolgen. Beispielsweise wird die Trennschicht hierbei von der Polyurethanschicht abgezogen.

Das erfindungsgemäße Verfahren kann kontinuierlich oder diskontinuierlich durchgeführt werden. Bevorzugt wird es kontinuierlich durchgeführt.

Kontinuierlich bedeutet in diesem Zusammenhang, dass Trennschicht und gegebenenfalls Substratschicht in Form von Bändern vorliegen, die kontinuierlich fortbewegt und gemäß dem erfindungsgemäßen Verfahren behandelt werden. Die Bänder weisen im allgemeinen eine Länge von 10 bis 500 Meter, bevorzugt von 20 bis 200 Metern auf.

In einem kontinuierlichen erfindungsgemäßen Verfahren liegt die Trennschicht quasi als "Trennband" vor. Die Trennschicht wird zu Beginn des Verfahrens bevorzugt von einer Spindel abgewickelt, die im erfindungsgemäßen Verfahren von der Polyurethanschicht abgetrennte Trennschicht kann bevorzugt wieder auf eine Spindel aufgewickelt werden. Diese aufgewickelte Trennschicht kann erneut im dem erfindungsgemäßen Verfahren eingesetzt werden, d.h. sie ist wiederverwertbar. Bevorzugt wird die aufgewickelte Trennschicht 2 bis 5 mal wiederverwertet.

In einem kontinuierlichen erfindungsgemäßen Verfahren liegt die Substratschicht quasi als "Substratband" vor. Die Substratschicht wird zu Beginn des Verfahrens bevorzugt von einer Spindel abgewickelt.

Durch dieses kontinuierliche erfindungsgemäße Verfahren erhält man eine Polyurethanschicht - gegebenenfalls im Verbund mit der Substratschicht - als Verfahrensprodukt, das ebenfalls in Form eines Bandes vorliegt. Das erhaltene Produkt wird bevorzugt auf eine Spindel aufgewickelt.

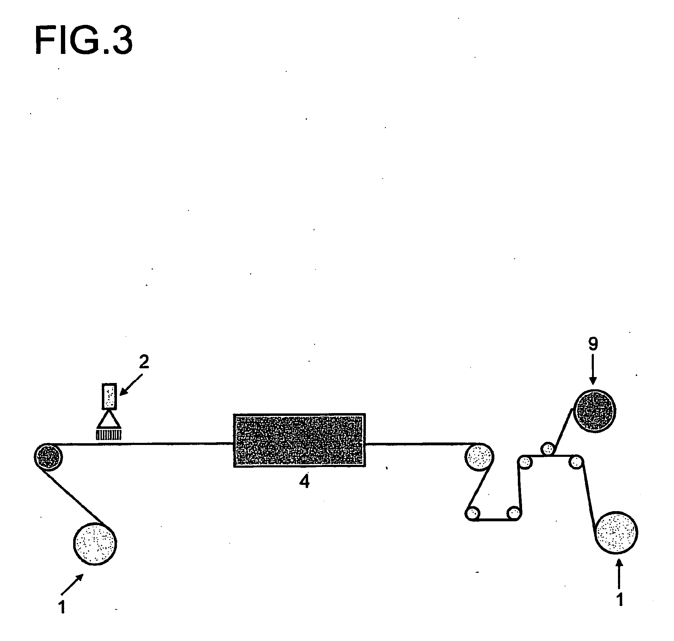

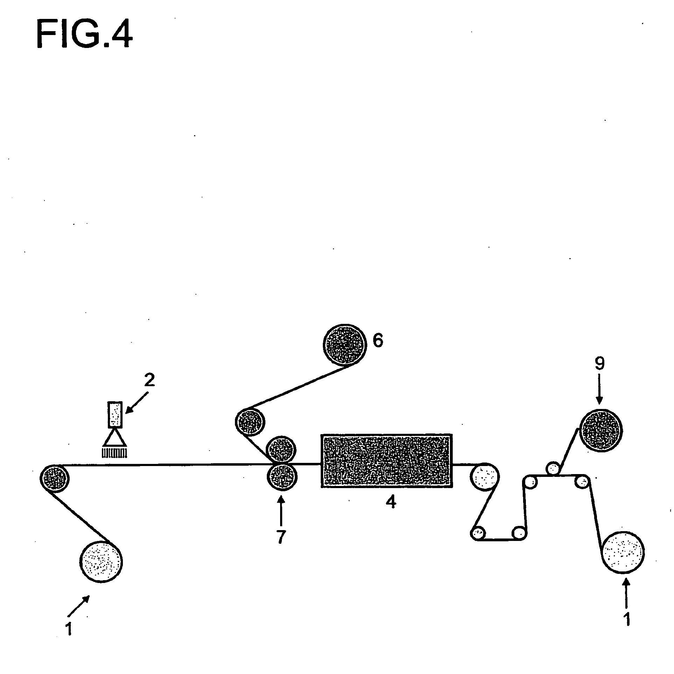

Bevorzugte Ausführungsformen des erfindungsgemäßen Verfahrens sollen durch die Figuren 3 und 4 näher veranschaulicht werden.
In den Figuren 3 und 4 bedeutet:
- 1: Trennschicht
- 2: Auftrag Polyurethansystemkomponenten
- 4: Ofen (optional)
- 5: Abkühlrolle (optional)
- 6: Substratschicht
- 7: Laminierrolle (optional)
- 8: Kühltrommel (optional)
- 9: Produktspindel (optional)

In einer bevorzugten Ausführungsform wird die Polyurethanschicht, erhältlich in dem erfindungsgemäßen Verfahren, verstreckt. Unter "Verstrecken" wird in diesem Zusammenhang verstanden, dass die Polyurethanschicht im festen Zustand einem Zug oder einem Druck in einer oder zwei Richtungen ( = mono- oder uniaxiale bzw. biaxiale Verstreckung) ausgesetzt wird. Diese Verstreckung führt zu einer Vergrößerung der Abmessungen bis zu einem Faktor 10, bevorzugt zu einer Vergrößerung der Abmessungen bis zu einem Faktor 1,1 bis 5, besonders bevorzugt zu einer Vergrößerung der Abmessungen bis zu einem Faktor 1,2 bis 2.

Die Verstreckung führt bevorzugt zu einer Verbesserung der Atmungsaktivität der erfindungemäßen Polyurethanschicht. Bevorzugt weist diese eine Atmungsaktivität von 0,5 bis 15 mg/cm², besonders bevorzugt von 3,5 bis 8,5 mg/cm², gemessen nach DIN EN ISO 14268, auf.

Die durch das erfindungsgemäße Verfahren erhältliche Polyurethanschicht, gegebenenfalls im Verbund mit der Substratschicht, eignet sich für zahlreiche Anwendungen.

In einer bevorzugten Ausführungsform wird die erfindungsgemäße Polyurethanschicht als Kunstleder verwendet. Gegenstand der Erfindung ist somit die Verwendung einer erfindungsgemäßen Polyurethanschicht als Kunstleder.

Ferner ist Gegenstand der Erfindung ein Polyurethankunstleder, enthaltend eine erfindungsgemäße Polyurethanschicht. Bevorzugt ist Gegenstand der Erfindung ein Polyurethankunstleder, erhältlich durch Umsetzung eines Polyisocyanatprepolymers (a), erhältlich durch Umsetzung von 4,4'-MDI mit Polytetrahydrofuran, mit einer Polyolkomponente, enthaltend Polytetrahydrofuran und 1,4-Butandiol.

Unter Kunstleder werden im allgemeinen flexible Flächengebilde verstanden, die unter Verwendung von Kunststoffen hergestellt wurden und welche dem Verwendungszweck entsprechende lederähnliche Eigenschaften und/oder Oberflächengestaltung (z.B. Prägung) aufweisen.

Das erfindungsgemäße Kunstleder ist für zahlreiche Anwendungen geeignet. Beispiele hierfür sind Sitzbezüge und Innenauskleidungen von Verkehrsmitteln, Koffer und Täschnerwaren, Schuhmaterial, Oberbekleidung und dergleichen.

In einer weiteren bevorzugten Ausführungsform wird die erfindungsgemäße Polyurethanschicht zur Beschichtung von Textilien verwendet. Gegenstand der Erfindung ist somit die Verwendung einer erfindungsgemäßen Polyurethanschicht zur Beschichtung von Textilien.

Ferner ist Gegenstand der Erfindung Textil, das mit einer erfindungsgemäßen Polyurethanschicht beschichtet ist. In einer bevorzugten Ausführungsform weist die Polyurethanschicht auf dem Textil eine Dicke von 0,001 bis 1 mm, mehr bevorzugt von 0,01 bis 0,5 mm auf. Bevorzugt ist Gegenstand der Erfindung ein Textil, das mit einer erfindungsgemäßen Polyurethanschicht, erhältlich durch Umsetzung eines Polyisocyanatprepolymers (a), erhältlich durch Umsetzung von 4,4'-MDI mit Polytetrahydrofuran, mit einer Polyolkomponente (b), enthaltend Polytetrahydrofuran und 1,4-Butandiol, beschichtet ist.

Beispiele für Textile, die mit einer erfindungsgemäßen Polyurethanschicht vorteilhaft beschichtet werden können sind Schwimmanzüge, insbesondere Tauchanzüge, Surfanzüge, Sportbekleidung, Stoffe für Regenschirme, Zeltplanen und dergleichen.

Gegenstand der Erfindung sind somit Schwimmanzüge, insbesondere Tauchanzüge, Surfanzüge, Regenschirme und Zeltplanen, enthaltend eine erfindungsgemäße Polyurethanschicht.

Die Erfindung soll durch nachfolgendes Beispiel veranschaulicht werden.

### Beispiel

Es wird ein erfindungsgemäßes Verfahren gemäß Figur 4 durchgeführt. Als Trennschicht dient ein genarbtes Papier. Als Substrat dient Spalt-Leder mit einer Dicke von 1-4 mm.

Folgende Polyurethansystemkomponenten werden aufgesprüht:
Isocyanatkomponente:
Prepolymer aus monomerem MDI und PTHF mit Molekulargewicht von 2000 g/mol Polyolkomponente:
69 Teile PTHF mit Molekulargewicht von 1000 g/mol 15 Teile 1,4-Butandiol
15 Teile Polyetherol erhältlich durch Propoxylierung/Ethoxylierung eines trifunktionellen Starters mit Molekulargewicht von 5000 g/mol
1 Teil Katalysator

Nach Aushärten bei 50°C in einem Ofen und Abziehen der Trennschicht erhält man genarbtes Kunstleder von optisch sehr hoher Qualität.

## Patentansprüche

1. Verfahren zur Herstellung einer Polyurethanschicht, umfassend die Schritte
i) Bereitstellen einer Trennschicht,
ii) Aufsprühen von Polyurethansystemkomponenten, umfassend eine Isocyanatkomponente (a) und eine Polyolkomponente (b), wobei beide Komponenten lösungsmittelfrei sind, auf die Trennschicht,
iii) gegebenenfalls Aufbringen einer Substratschicht auf die Polyurethansystemkomponenten,
iv) Aushärten der Polyurethansystemkomponenten zu einer Polyurethanschicht,
v) Trennen der Trennschicht von der Polyurethanschicht.

2. Verfahren nach Anspruch 1, **dadurch gekennzeichnet, dass** es sich um ein kontinuierliches Verfahren handelt.

3. Verfahren nach Anspruch 1 oder 2, **dadurch gekennzeichnet, dass** die Polyurethanschicht eine Dicke von 0,1 bis 10 Millimeter aufweist.

4. Verfahren nach einem der Ansprüche 1 bis 3, **dadurch gekennzeichnet, dass** die Polyurethansystemkomponenten ein Treibmittel (c) enthalten.

5. Verfahren nach einem der Ansprüche 1 bis 4, **dadurch gekennzeichnet, dass** die Polyurethansystemkomponenten einen Füllstoff (d) enthalten.

6. Verfahren nach einem der Ansprüche 1 bis 5, **dadurch gekennzeichnet, dass** die in Schritt (iv) oder (v) erhaltene Polyurethanschicht verstreckt wird.

7. Verfahren nach einem der Ansprüche 1 bis 6, **dadurch gekennzeichnet, dass** die Polyurethansystemkomponenten als Isocyanatkomponente (a) ein Polyisocyanatprepolymers, erhältlich durch Umsetzung von 4,4'-MDI mit Polytetrahydrofuran, mit einer Polyolkomponente (b), enthaltend Polytetrahydrofuran und 1,4-Butandiol enthalten.

8. Polyurethanschicht, erhältlich nach einem Verfahren gemäß einem der Ansprüche 1 bis 8.

9. Verwendung einer Polyurethanschicht nach Anspruch 8 als Kunstleder.

10. Verwendung einer Polyurethanschicht nach Anspruch 8 zur Beschichtung von Textilien.

11. Textil, beschichtet mit einer Polyurethanschicht nach Anspruch 8.

## Claims

1. A process for producing a polyurethane layer comprising the steps of
i) providing a release layer,
ii) spraying polyurethane system components comprising an isocyanate component (a) and a polyol component (b), the two components being solvent free, atop the release layer,
iii) optionally applying a substrate layer atop the polyurethane system components,
iv) curing the polyurethane system components to form a polyurethane layer,
v) separating the release layer from the polyurethane layer.

2. The process according to claim 1 as a continuous process.

3. The process according to claim 1 or 2 wherein the polyurethane layer is from 0.1 to 10 millimeters thick.

4. The process according to any one of claims 1 to 3 wherein the polyurethane system components comprise a blowing agent (c).

5. The process according to any one of claims 1 to 4 wherein the polyurethane system components comprise a filler (d).

6. The process according to any one of claims 1 to 5 wherein the polyurethane layer obtained in step (iv) or (v) is subjected to stretching.

7. The process according to any of claims 1 to 6 wherein the polyurethane system components comprise, as isocyanate component (a), polyisocyanate prepolymer obtainable by reaction of 4,4'-MDI with polytetrahydrofuran with a polyol component (b) comprising polytetrahydrofuran and 1,4-butanediol.

8. A polyurethane layer obtainable by a process according to any one of claims 1 to 8.

9. The use of a polyurethane layer according to claim 8 as artificial leather.

10. The use of a polyurethane layer according to claim 8 for coating textiles.

11. Textile coated with a polyurethane layer according to claim 8.

## Revendications

1. Procédé pour la fabrication d'une couche de polyuréthane, comprenant les étapes de
i) mise à disposition d'une couche de séparation,
ii) pulvérisation de composants du système de polyuréthane, comprenant un composant de type isocyanate (a) et un composant de type polyol (b), où les deux composants sont exempts de solvant, sur la couche de séparation,
iii) le cas échéant application d'une couche de substrat sur les composants du système de polyuréthane,
iv) durcissement des composants du système de polyuréthane en une couche de polyuréthane,
v) séparation de la couche de séparation de la couche de polyuréthane.

2. Procédé selon la revendication 1, **caractérisé en ce qu'**il s'agit d'un procédé continu.

3. Procédé selon la revendication 1 ou 2, **caractérisé en ce que** la couche de polyuréthane présente une épaisseur de 0,1 à 10 millimètres.

4. Procédé selon l'une quelconque des revendications 1 à 3, **caractérisé en ce que** les composants du système de polyuréthane contiennent un agent gonflant (c).

5. Procédé selon l'une quelconque des revendications 1 à 4, **caractérisé en ce que** les composants du système de polyuréthane contiennent une charge (d).

6. Procédé selon l'une quelconque des revendications 1 à 5, **caractérisé en ce que** la couche de polyuréthane obtenue dans l'étape (iv) ou (v) est étirée.

7. Procédé selon l'une quelconque des revendications 1 à 6, **caractérisé en ce que** les composants du système de polyuréthane contiennent comme composant de type isocyanate (a) un prépolymère de polyisocyanate, pouvant être obtenu par transformation de 4,4'-MDI avec du polytétrahydrofuranne, avec un composant de type polyol (b), contenant du polytétrahydrofuranne et du 1,4- butanediol.

8. Couche de polyuréthane, pouvant être obtenue selon un procédé selon l'une quelconque des revendications 1 à 7.

9. Utilisation d'une couche de polyuréthane selon la revendication 8 comme similicuir.

10. Utilisation d'une couche de polyuréthane selon la revendication 8 pour le revêtement de textiles.

11. Textile, revêtu par une couche de polyuréthane selon la revendication 8.
